# EUROPÄISCHE PATENTSCHRIFT

(11) **EP 1 819 201 B1**
(45) Veröffentlichungstag und Bekanntmachung des Hinweises auf die Patenterteilung: **20.08.2008**
(21) Anmeldenummer: 06002529.3
(22) Anmeldetag: 08.02.2006
(51) Int. Cl.: H05B 3/58

(54) **Vorrichtung zur Beheizung von zylindrischen Teilen**
Heating device for cylindrical pieces
Dispositif de chauffage de pièces cylindriques

(43) Veröffentlichungstag der Anmeldung: 15.08.2007
(73) Patentinhaber: Hotset Heizpatronen u. Zubehör GmbH, 58511 Lüdenscheid (DE)
(72) Erfinder: Liebram, Udo, 64319 Pfungstadt (DE); Sattler, Peter, 64673 Zwingenberg (DE); Wölper, Hendrik, 58332 Schwelm (DE)
(74) Vertreter: Köchling, Conrad-Joachim

(56) Entgegenhaltungen:
- DE-A1- 10 124 960
- US-A- 4 447 707
- US-A- 5 591 367
- US-A- 5 798 504
- US-A- 5 961 868
- US-A1- 2003 143 302

## Beschreibung

Die Erfindung betrifft eine Vorrichtung zur Beheizung von zylindrischen Teilen, insbesondere Rohren oder Düsen von Spritzgießeinrichtungen, bestehend aus einer wendelartig geformten elektrischen Heizpatrone, die auf ein zu beheizendes Teil aufschiebbar oder in ein zu beheizendes Teil einschiebbar ist, sowie einer Spannvorrichtung, mittels derer die Heizpatrone gegen den Außenmantel oder gegen den Innenmantel des zu beheizenden Teils andrückbar ist, wobei die wendelartig geformte Heizpatrone auf ihrer der zu beheizenden Fläche abgewandten Seite ein Rohr, insbesondere ein Reflektionsrohr aufweist, wobei die Endbereiche der wendelartig geformten Heizpatrone an den Endbereichen des Rohres fixiert sind.

Es ist zur Beheizung von zylindrischen Teilen üblich, wendelartig geformte elektrische Heizpatronen als Heizelemente einzusetzen. Solche Heizpatronen bestehen aus einem zu einer Wendelform formbaren Mantel mit innenliegender hochwärmeleitfähiger elektrischer Isolierung und innenliegenden Heizleitern. Um zu erreichen, dass eine solche wendelartig geformte Heizpatrone fest an das zu beheizende zylindrische Teil angelegt werden kann, sind im Stand der Technik zusätzliche Spannvorrichtungen bekannt, wozu beispielsweise auf die DE 102 47 509 A1 verwiesen wird. Hierbei sind jeweils zusätzliche Spannelemente erforderlich, die den Herstellungs- und Montageaufwand vergrößern. In der angegebenen Druckschrift ist auch schon beschrieben, dass es bekannt ist, Reflektionsrohre einzusetzen, die über das gewendelte Heizelement in Form eines Metallrohres geschoben werden. Das Metallrohr wird dabei mit dem Heizelement an den Enden des Reflektionsrohres verlötet. Ein zusätzliches Spannen ist hierbei nicht möglich.

Der Einbau solcher Vorrichtungen ist sowohl in der Weise möglich, dass die wendelartig geformte elektrische Heizpatrone außen auf ein zylindrisches Teil aufgebracht wird, welches beispielsweise in Form einer Düse einer Spritzgießmaschine ausgebildet ist, so dass die durchfließende Schmelze durch die Heizpatrone erhitzt wird. Es ist aber auch möglich, ein beispielsweise von Schmelze umströmtes Rohr in der Weise aufzuheizen, dass die wendelartig geformte elektrische Heizpatrone innen in das Rohr eingebracht und gegen den Rohrmantel angedrückt wird, um damit die außen an dem Rohr vorbeifließende Schmelze oder dergleichen zu erhitzen.

Ausgehend von diesem Stand der Technik liegt der Erfindung die Aufgabe zu Grunde, eine Vorrichtung gattungsgemäßer Art zu schaffen, die aus wenigen Einzelteilen besteht und eine sehr einfache Montage ermöglicht, wobei insbesondere erreicht werden soll, dass die wendelartig geformte Heizpatrone möglichst über ihren gesamten Verlauf fest an den zu beheizenden Gegenstand, beispielsweise eine Düse oder ein Rohr angepresst wird.

Zur Lösung dieser Aufgabe schlägt die Erfindung vor, dass das Rohr aus zwei Teilrohren besteht, die in einer Montagelage gegeneinander verdrehbar sind, so dass die wendelartig geformte Heizpatrone im Durchmesser verjüngt oder aufgeweitet ist, wobei die Teilrohre in beliebiger relativer Drehlage zueinander durch Arretiermittel unverdrehbar arretierbar sind.

Ganz allgemein besteht das Rohr, welches die wendelartig geformte Heizpatrone umgibt oder welches von der wendelartig geformten Heizpatrone umgeben ist, aus zwei Teilrohren, die gegeneinander um die gemeinsame Längsmittelachse verdrehbar sind, wobei durch das Verdrehen der Teilrohre gegeneinander die wendelartig geformte Heizpatrone im Durchmesser verjüngt oder aufgeweitet wird. Es ist somit beispielsweise zur Beheizung einer Düse möglich, die Vorrichtung in einer Position auf die Düse aufzuschieben, in der die wendelartig geformte Heizpatrone im Durchmesser aufgeweitet ist. Nach Positionierung in entsprechender Position auf der Düse können die Teilrohre gegeneinander verdreht werden, so dass sich der Durchmesser der wendelartig geformten Heizpatrone verjüngt und die Heizpatrone somit gegen den Mantel der Düse zunehmend angepresst wird, so dass ein guter Wärmeübergang erreicht wird. Alternativ kann die Anordnung auch so vorgesehen sein, dass die wendelartig geformte Heizpatrone außen auf die Teilrohre aufgebracht ist, so dass diese Einheit in ein zu beheizendes Rohr eingeschoben werden kann. Dabei ist die wendelartig geformte Heizpatrone zunächst im Durchmesser verjüngt, so dass ein Einschieben in das zu beheizende Rohr in einfacher Weise möglich ist. Anschließend können die beiden Teilrohre gegeneinander verdreht werden, wobei durch die Verdrehung die wendelartig geformte Heizpatrone im Durchmesser aufgeweitet wird, bis sie am Innenmantel des zu beheizenden Rohres anliegt, so dass wiederum ein guter Wärmeübergang erreicht ist. Die beiden Teilrohre sind in der gewünschten Installationslage, wenn also die wendelartig geformte Heizpatrone an das zu beheizende Element angedrückt ist, in der entsprechenden relativen Drehlage zueinander durch Arretiermittel unverdrehbar arretiert, so dass sie sich nicht selbstständig in eine Stellung verdrehen können, in der die gewünschte Solllage nicht mehr erreicht ist.

Eine bevorzugte Weiterbildung hierzu wird darin gesehen, dass die Teilrohre an ihren einander zugewandten Endbereichen eine Verzahnung als Arretiermittel aufweisen, wobei die Verzahnung in der Montagelage außer Eingriff und in Arretierlage miteinander in Eingriff ist.

Entsprechend dieser Ausbildung können die Teilrohre an ihren einander zugewandten Stirnkanten jeweils eine Verzahnung als Arretiermittel aufweisen. Um die Teilrohre gegeneinander verdrehen zu können, werden sie so zueinander positioniert, dass die stirnseitige Verzahnung außer Eingriff ist und ein Verdrehen der Teilrohre gegeneinander ermöglicht ist. Sobald die gewünschte Solllage erreicht ist, wird die stirnseitige Verzahnung der beiden Teilrohre miteinander in Eingriff gebracht, so dass hierdurch ein Formschluss erreicht ist, der verhindert, dass sich die Teilrohre aus dieser Arretierlage selbstständig verdrehen.

Zusätzlich kann vorgesehen sein, dass das Arretiermittel, insbesondere die Verzahnung, durch eine Schutzschicht überdeckt ist.

Vorzugsweise ist dabei vorgesehen, dass die Schutzschicht eine Klebefolie ist.

Auch kann vorgesehen sein, dass als Schutzschicht an dem das Arretiermittel oder die Verzahnung aufweisende Ende mindestens eines Teilrohres ein Kragen ausgebildet oder angeordnet ist, der bei in Eingriff befindlichen Arretiermitteln oder Verzahnungen diese überdeckt.

Besonders bevorzugt ist vorgesehen, dass die Verzahnung selbsthemmend ist.

Hierbei ist die Größe des Verzahnungskeilwinkels an den stirnseitigen Verzahnungen so ausgebildet, dass bei ineinandergreifenden Verzahnungen diese sich in der Selbsthemmung befinden in Abhängigkeit des Reibwertes an den Zahnflanken.

Ein sicherer Sitz der Halbrohre der Arretierlage ist damit gewährleistet.

Gegebenenfalls kann vorgesehen sein, dass die Zahnflanken der Zähne der Verzahnung aufgeraut sind.

Sollte beispielsweise der Reibwert zu klein sein, so dass die Selbsthemmung nicht mehr erreicht wird, können die Zahnflanken beispielsweise chemisch aufgeraut sein, so dass ein erhöhter Reibwert erreicht wird, der wiederum zur Selbsthemmung ausreicht.

In an sich bekannter Weise kann vorgesehen sein, dass parallel zum Verlauf der wendelförmigen Heizpatrone ein Temperaturfühler angeordnet ist.

Beispielsweise kann ein solcher Temperaturfühler in dem rohrförmigen wendelförmigen Heizpatronenelement angebracht sein.

Um eine sichere Drehmitnahme der wendelförmigen Heizpatrone beim Drehen der Teilrohre zu erreichen, kann vorgesehen sein, dass am der Trennstelle der Teilrohre angewanden Ende des einen Teilrohres eine federnde Blechzunge oder dergleichen Federelement fixiert ist, an der oder an dem das eine Ende der wendelartigen Heizpatrone fixiert ist.

Beispielsweise kann an dem entsprechenden Ende der wendelförmigen Heizpatrone eine federnde Blechzunge vorzugsweise mittels Hartlot befestigt werden, die wiederum mit einem Schweißpunkt am Teilrohr fixiert ist. Das Federelement, insbesondere die Blechzunge, hat die Aufgabe, das Ende der wendelförmigen Heizpatrone am Endbereich des Teilrohres zu fixieren, wobei das Element zudem so gestaltet ist, dass in der Arretierlage die wendelförmige Heizpatrone auch in diesem Bereich kraftschlüssig an das zu beheizende Teil angelegt ist, um auch eine optimale Wärmeübertragung in diesem Bereich zu ermöglichen. Vorzugsweise kann hierzu das Federelement als abgekröpftes Element ausgebildet sein, welches sich beim Verdrehen der Teilrohre und bei dem entsprechenden Spannen des Heizelementes in Richtung auf die Mittellängsachse der Teilrohre bewegt.

Zudem ist vorgesehen, dass am der Trennstelle der Teilrohre abgewandten Ende des einen Teilrohres das Ende der wendelartigen Heizpatrone fixiert ist, wobei von diesem Ende die elektrischen Anschlüsse der Heizpatrone abgehen.

Das andere Ende der wendelartigen Heizpatrone ist damit an dem anderen Teilrohr ebenfalls im Endbereich befestigt, beispielsweise unmittelbar durch Hartlot. An diesem Endbereich gehen vorzugsweise die elektrischen Leitungen von der wendelartigen Heizpatrone ab, so dass dieser Bereich ohnehin nicht beheizt ist und daher ein oberflächiges Anlegen an das zu beheizende Element nicht erforderlich ist.

Durch die Fixierung der beiden Enden der wendelartigen Heizpatrone an den beiden Teilrohren ist sichergestellt, dass bei Verdrehung der Teilrohre gegeneinander die wendelartige Heizpatrone mitgenommen wird und somit der Durchmesser verengt oder aufgeweitet werden kann.

Durch die erfindungsgemäße Ausbildung wird eine hervorragende Funktion bei der Anwendung bei Heißkanalsystemen von Spritzgießeinrichtungen erreicht, wobei eine gleichmäßige, genau reproduzierbare und homogene Wärmeübertragung von der wendelartig geformten elektrischen Heizpatrone zu dem zu beheizenden Element erreicht wird. Zudem ist die gesamte Anordnung Platz sparend, was in bestimmten Einbausituationen von besonderem Vorteil ist. Auch besteht die Vorrichtung nur aus wenigen Bestandteilen, so dass die Herstellungskosten gering sind. Auch bei Reparaturen ist es in einfacher Weise möglich, die Vorrichtung aus der Arretierlage in Montagelage zu verstellen, um anschließend die Vorrichtung von dem zu beheizenden Teil in einfacher Weise abziehen zu können oder aus dem zu beheizenden Teil herausziehen zu können.

Zur Montage kann die Vorrichtung in eine Position verstellt werden, in der die elektrische Heizpatrone quasi entspannt ist und durch die Arretiermittel in dieser Position gehalten ist. Es besteht dann eine Spielpassung zwischen der elektrischen Heizpatrone und dem zu beheizenden Element, so dass die Vorrichtung in einfacher Weise leichtgängig auf ein entsprechend zu beheizendes Element aufgeschoben oder in das zu beheizende Element eingeschoben werden kann. Die Vorrichtung kann dann mit ihren vorzugsweise an einem Ende abbiegenden Anschlüssen in axialer und radialer Richtung in gewünschter Position positioniert werden. Sofern vorhanden, wird anschließend die Schutzschicht im Bereich der Verzahnung beziehungsweise der Arretiermittel entfernt. Das eine Teilrohr kann in dieser Position mit einer Hand oder auch mit einer Vorrichtung festgehalten werden, während das andere Teilrohr in axialer Richtung bewegt wird, so dass das Arretiermittel, insbesondere die Verzahnung außer Eingriff ist. Anschließend kann dieses Teilrohr um seine Längsmittelachse gedreht werden, bis die Heizpatrone vollflächig und kraftschlüssig an dem zu beheizenden Element anliegt. Danach wird das eine Teilrohr wieder in axialer Richtung zum anderen Teilrohr hin verschoben, so dass die Arretiermittel beziehungsweise die Verzahnung miteinander in Eingriff sind. Es ist damit die Montagesollposition erreicht. Zur Sicherung der Lage und zum Schutz der Verzahnung kann anschließend die gegebenenfalls vorhandene Schutzschicht oder Klebefolie über den Bereich der Verzahnung aufgebracht werden.

Zur Demontage erfolgt entsprechende Handhabung in analoger Weise.

Die Erfindung ist nachstehend anhand der beigefügten Zeichnung erläutert. Es zeigt:
- Figur 1: eine erfindungsgemäße Vorrichtung in einer ersten Gebrauchslage in Ansicht;
- Figur 2: die dazugehörige wendelartig geformte elektrische Heizpatrone in Ansicht;
- Figur 3: die Vorrichtung in einer Montagelage;
- Figur 4: die Vorrichtung in der Gebrauchslage.

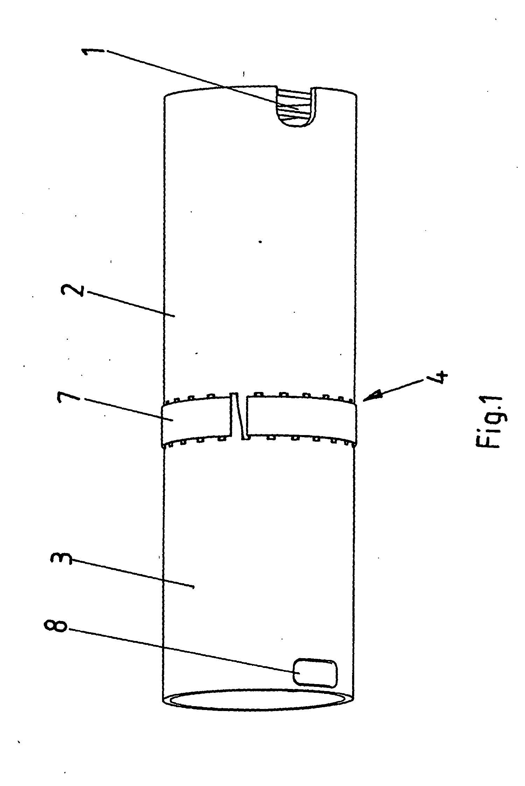

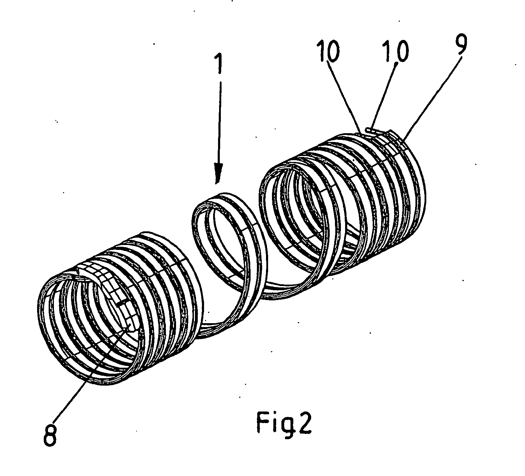

In der Zeichnung ist eine Vorrichtung zur Beheizung von zylindrischen Teilen, insbesondere Düsen von Spritzgießeinrichtungen, gezeigt. Sie besteht aus einer wendelartig geformten elektrischen Heizpatrone 1, die von ihrem einen Ende bis zum anderen Ende gleichsinnig gewendelt ist, wie insbesondere in Figur 2 gezeigt. Diese wendelartig geformte elektrische Heizpatrone 1 ist zur bestimmungsgemäßen Benutzung auf ein zu beheizendes Teil aufschiebbar. In der entsprechenden Betriebslage kann die Heizpatrone 1 mit einer Spannvorrichtung, die später noch im Einzelnen beschrieben wird, gegen den Außenmantel des zu beheizenden Teils angedrückt werden. Wie beispielsweise aus Figur 1 ersichtlich, ist die wendelartig geformte Heizpatrone 1 auf ihrer der zu beheizenden Fläche abgewandten Seite von einem Rohr, insbesondere Reflektionsrohr, umgeben. Dabei sind die Endbereiche der wendelartig geformten Heizpatrone 1 an den Endbereichen des Rohres fixiert.

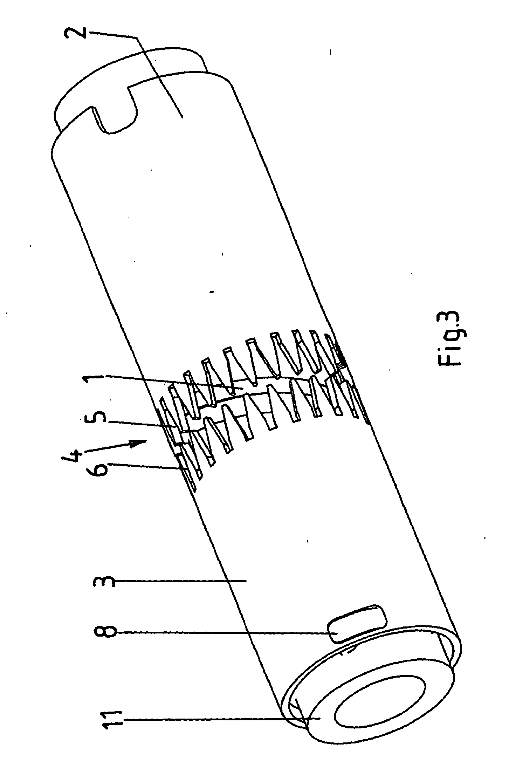

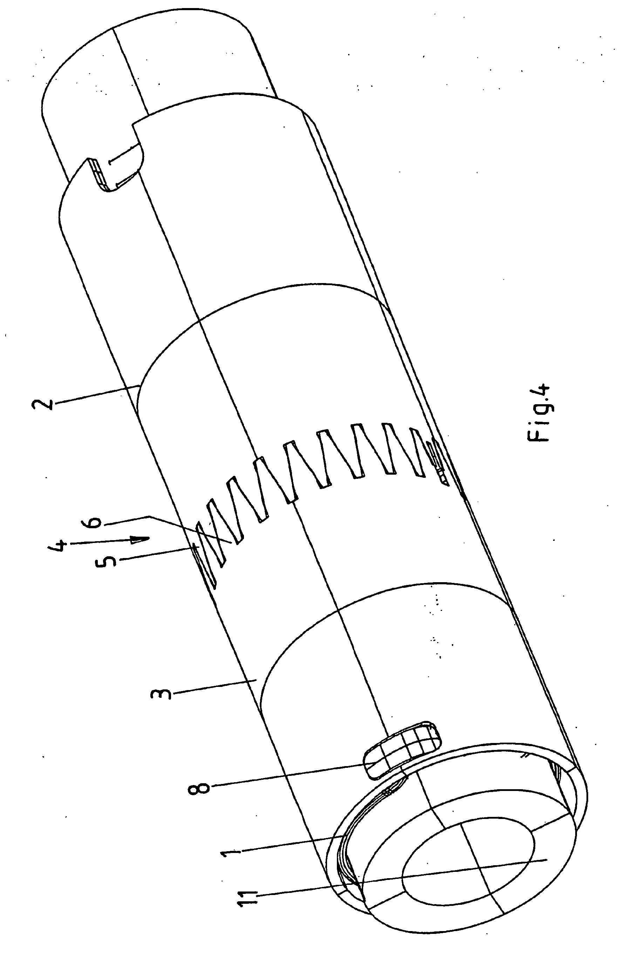

Um zu ermöglichen, dass mittels des Rohres eine Anspannung der elektrischen Heizpatrone 1 an das zu beheizende Element erfolgen kann, ist vorgesehen, dass das Rohr aus zwei Teilrohren 2, 3 besteht, die in einer Montagelage, die in Figur 3 gezeigt ist, gegeneinander verdrehbar sind, so dass die wendelartig geformte innenliegende Heizpatrone 1 im Durchmesser verjüngt werden kann oder bei entgegengesetzter Drehung der Teilrohre 2, 3 aufgeweitet werden kann. Die Teilrohre 2, 3 sind in beliebiger relativer Drehlage zueinander durch Arretiermittel 4 zu fixieren. Im Ausführungsbeispiel sind die Teilrohre 2, 3 an ihren zueinander gewandten Endbereichen mit einer Verzahnung 5 beziehungsweise 6 versehen, die stirnseitig an den Teilrohren ausgebildet ist, wobei die Verzahnung in der Montagelage, die in Figur 3 gezeigt ist, außer Eingriff ist, während sie in der Arretierlage, die beispielsweise in Figur 4 gezeigt ist, fest in Eingriff ist.

Unter Umständen kann vorgesehen sein, dass das Arretiermittel 4, insbesondere die Verzahnung 5, 6 durch eine Schutzschicht 7 verdeckt ist, die beispielsweise in Form einer Klebefolie ausgebildet sein kann.

Die Verzahnung 5, 6 ist vorzugsweise selbsthemmend ausgebildet, wobei gegebenenfalls zusätzlich oder alternativ die Zahnflanken der Zähne der Verzahnung 5, 6 aufgeraut sein können, um die Reibwerte zu erhöhen.

An dem der Trennstelle der Teilrohre 2, 3 abgewandten Ende des ersten Teilrohres 3 ist eine abgekröpfte federnde Blechzunge 8 befestigt, die ebenfalls an dem ersten Ende der wendelartigen Heizpatrone 1 befestigt ist, wie aus Figur 2 ersichtlich ist. Diese abgekröpfte Blechzunge 8 kann beispielsweise an dem Ende der wendelartigen Heizpatrone 1 mittels Hartlot befestigt sein. Das andere Ende der federnden Blechzunge 8 kann mit einem Schweißpunkt an dem entsprechenden Teilrohr 3 fixiert werden, wobei das Teilrohr 3 im Bereich der Anordnung der Blechzunge 8 eine längliche, sich in Umfangsrichtung erstreckende Ausnehmung aufweist. Das zweite Ende der wendelartigen Heizpatrone 1 ist beispielsweise bei 9 an der Trennstelle der Teilrohre 2, 3 abgewandten Ende des zweiten Teilrohres 2 fixierbar, beispielsweise mittels Hartlot, wobei von diesem Ende der wendelartigen Heizpatrone 1 die elektrischen Anschlussleiter 10 abgehen.

Zur bestimmungsgemäßen Benutzung wird die wendelartig geformte elektrische Heizpatrone 1 in die Teilrohre 2 und 3 eingeschoben, wobei die beiden Enden (bei 8 und bei 9) der wendelartigen Heizpatrone 1 an den einander abgewandten Enden der Teilrohre 2, 3 in der angegebenen Weise fixiert werden. Die Teilrohre 2, 3 werden dann oder hierbei in eine Position eingestellt, in der die wendelartige Heizpatrone 1 im Durchmesser soweit wie möglich aufgeweitet ist, so dass sie am Innenmantel der Teilrohre 2, 3 anliegt. In dieser Position kann das Element, wie es beispielsweise in Figur 1 gezeigt ist, auf ein zu beheizendes Teil aufgeschoben werden und lagerichtig positioniert werden. Nachfolgend wird dann die Schutzfolie 7 entfernt. Der Benutzer kann dann mit der Hand oder mit einer Vorrichtung das Teilrohr 3 festhalten und das Teilrohr 2 axial in eine Montagelage verschieben, in der die Verzahnung 5, 6 außer Eingriff ist, wie dies in Figur 3 gezeigt ist. Nachfolgend kann der Benutzer dann das Teilrohr 2 relativ zum Teilrohr 3 drehen, wobei durch die Drehung die wendelartige Heizpatrone 1 verdreht wird und im Durchmesser eingeengt wird, bis diese sich an den Umfang des zu beheizenden Elementes 11 anlegt. Nachfolgend werden die Teilrohre 2 und 3 axial zueinander verschoben und angenähert, so dass die Position gemäß Figur 4 erreicht ist, in der die Verzahnung 5, 6 in Eingriff ist. Die Lage ist damit gesichert, da die Verzahnung selbsthemmend ausgebildet ist. Es ist möglich, anschließend wiederum die Schutzfolie 7 aufzubringen.

Die Demontage kann in analog umgekehrter Weise erfolgen.

## Patentansprüche

1. Vorrichtung zur Beheizung von zylindrischen Teilen (11), insbesondere Rohren oder Düsen von Spritzgießeinrichtungen, bestehend aus einer wendelartig geformten elektrischen Heizpatrone (1), die auf ein zu beheizendes Teil (11) aufschiebbar oder in ein zu beheizendes Teil einschiebbar ist, sowie einer Spannvorrichtung, mittels derer die Heizpatrone (1) gegen den Außenmantel oder gegen den Innenmantel des zu beheizenden Teils (11) andrückbar ist, wobei die wendelartig geformte Heizpatrone (1) auf ihrer der zu beheizenden Fläche abgewandten Seite ein Rohr, insbesondere ein Reflektionsrohr aufweist, wobei die Endbereiche der wendelartig geformten Heizpatrone (1) an den Endbereichen des Rohres fixiert sind, **dadurch gekennzeichnet, dass** das Rohr aus zwei Teilrohren (2, 3) besteht, die in einer Montagelage gegeneinander verdrehbar sind, so dass die wendelartig geformte Heizpatrone (1) im Durchmesser verjüngt oder aufgeweitet ist, wobei die Teilrohre (2, 3) in beliebiger relativer Drehlage zueinander durch Arretiermittel (4) unverdrehbar arretierbar sind.

2. Vorrichtung nach Anspruch 1, **dadurch gekennzeichnet, dass** die Teilrohre (2, 3) an ihren einander zugewandten Endbereichen eine Verzahnung (5, 6) als Arretiermittel (4) aufweisen, wobei die Verzahnung (5, 6) in der Montagelage außer Eingriff und in Arretierlage miteinander in Eingriff ist.

3. Vorrichtung nach Anspruch 1 oder 2, **dadurch gekennzeichnet, dass** das Arretiermittel (4), insbesondere die Verzahnung (5, 6), durch eine Schutzschicht (7) überdeckt ist.

4. Vorrichtung nach Anspruch 3, **dadurch gekennzeichnet, dass** die Schutzschicht (7) eine Klebefolie ist.

5. Vorrichtung nach Anspruch 3, **dadurch gekennzeichnet, dass** als Schutzschicht (7) an dem das Arretiermittel (4) oder die Verzahnung (5, 6) aufweisende Ende mindestens eines Teilrohres (2, 3) ein Kragen ausgebildet oder angeordnet ist, der bei in Eingriff befindlichen Arretiermitteln (4) oder Verzahnungen (5, 6) diese überdeckt.

6. Vorrichtung nach einem der Ansprüche 2 bis 5, **dadurch gekennzeichnet, dass** die Verzahnung (5, 6) selbsthemmend ist.

7. Vorrichtung nach einem der Ansprüche 2 bis 6, **dadurch gekennzeichnet, dass** die Zahnflanken der Zähne der Verzahnung (5, 6) aufgeraut sind.

8. Vorrichtung nach einem der Ansprüche 1 bis 7, **dadurch gekennzeichnet, dass** parallel zum Verlauf der wendelförmigen Heizpatrone (1) ein Temperaturfühler angeordnet ist.

9. Vorrichtung nach einem der Ansprüche 1 bis 8, **dadurch gekennzeichnet, dass** am der Trennstelle der Teilrohre (2, 3) angewanden Ende des einen Teilrohres (3) eine federnde Blechzunge (8) oder dergleichen Federelement fixiert ist, an der oder an dem das eine Ende der wendelartigen Heizpatrone (1) fixiert ist.

10. Vorrichtung nach einem der Ansprüche 1 bis 9, **dadurch gekennzeichnet, dass** am der Trennstelle der Teilrohre (2, 3) abgewandten Ende des einen Teilrohres (2) das Ende der wendelartigen Heizpatrone (1) fixiert ist, wobei von diesem Ende die elektrischen Anschlüsse (10) der Heizpatrone (1) abgehen.

## Claims

1. Heating device for cylindrical pieces (11), in particular pipes or nozzles of injection-moulding machines, comprising a heating cartridge (1) formed in spiral shape, which can be pushed onto a part (11) to be heated or can be inserted in a part to be heated, as well as a clamping device, by means of which the heating cartridge (1) can be pressed against the outer casing or against the inner casing of the part (11) to be heated, wherein the heating cartridge (1) formed in spiral shape on its side turned away from the face to be heated has a pipe, in particular a reflector pipe, the end regions of the heating cartridge (1) formed in spiral shape being fixed on the end regions of the pipe, **characterized in that** the pipe consists of two partial pipes (2, 3) twistable against each other in a mounting position, so that the heating cartridge (1) formed in spiral shape is tapered or expanded in diameter, the partial pipes (2, 3) being locked together, in rotation-blocked manner, in arbitrary relative pivot position by locking means (4).

2. Device according to claim 1, **characterized in that** the partial pipes (2, 3), on their end regions turned towards each other, exhibit teeth (5, 6) as locking means (4), wherein the teeth (5, 6) in the mounting position are disengaged and in the locking position are engaged with one another.

3. Device according to claim 1 or 2, **characterized in that** the locking means (4), in particular the teeth (5, 6), are covered by a protective layer (7).

4. Device according to claim 3, **characterized in that** the protective layer (7) is an adhesive film.

5. Device according to claim 3, **characterized in that** a collar, which when locking means (4) or teeth (5,6) are engaged covers these, is formed or arranged as protective layer (7) on the end, comprising the locking means (4) or teeth (5, 6), of at least one partial pipe (2, 3).

6. Device according to anyone of claims 2 to 5, **characterized in that** the teeth (5, 6) are self-locking.

7. Device according to anyone of claims 2 to 6, **characterized in that** the profiles of the teeth (5, 6) are roughened.

8. Device according to anyone of claims 1 to 7, **characterized in that** a temperature sensor is arranged parallel to the direction of the heating cartridge (1) formed in spiral shape.

9. Device according to anyone of claims 1 to 8, **characterized in that** a sprung metal tongue (8) or similar spring element, on which the one end of the heating cartridge (1) formed in spiral shape is fixed, is secured on the end, turned towards the interface of the partial pipes (2, 3), of the one partial pipe (3).

10. Device according to anyone of claims 1 to 9, **characterized in that** the end of the heating cartridge (1) formed in spiral shape is secured on the end, turned away from the interface of the partial pipes (2, 3), of the one partial pipe (2), from which end the electrical connections (10) of the heating cartridge (1) proceed.

## Revendications

1. Dispositif de chauffage de pièces cylindriques (11), notamment de tubes ou de buses d'équipements de moulage par injection, constitué d'une cartouche chauffante électrique (1) en hélice, qui peut être enfilée sur une pièce à chauffer (11) ou dans une pièce à chauffer (11), et d'un dispositif de serrage au moyen duquel la cartouche chauffante (1) peut être pressée contre l'enveloppe extérieure ou contre l'enveloppe intérieure de la pièce à chauffer (11), sachant que la cartouche chauffante en hélice (1) présente sur son côté opposé à la surface à chauffer un tube, notamment un tube de réflexion, sachant que les régions terminales de la cartouche chauffante en hélice (1) sont immobilisées sur les régions terminales du tube, **caractérisé en ce que** le tube est constitué de deux tubes partiels (2, 3) qui sont rotatifs l'un par rapport à l'autre dans une position de montage, de sorte que le diamètre de la cartouche chauffante en hélice (1) est diminué ou augmenté, sachant que les tubes partiels (2, 3) peuvent être bloqués sans possibilité de rotation par des moyens de blocage (4) dans une position quelconque de rotation relative l'un par rapport à l'autre.

2. Dispositif selon la revendication 1, **caractérisé en ce que** les tubes partiels (2, 3) présentent sur leurs régions terminales en vis-à-vis une denture (5, 6) comme moyen de blocage (4), sachant que la denture (5, 6) est hors de prise dans la position de montage et en prise mutuelle dans la position de blocage.

3. Dispositif selon la revendication 1 ou 2, **caractérisé en ce que** le moyen de blocage (4), notamment la denture (5, 6), est recouvert par une couche protectrice (7).

4. Dispositif selon la revendication 3, **caractérisé en ce que** la couche protectrice (7) est un film adhésif.

5. Dispositif selon la revendication 3, **caractérisé en ce qu'**un collet est formé ou disposé comme couche protectrice (7) sur l'extrémité d'au moins un tube partiel (2, 3) qui présente le moyen de blocage (4) ou la denture (5, 6), collet qui recouvre les moyens de blocage (4) ou dentures (5, 6) lorsque ceux-ci sont en prise.

6. Dispositif selon l'une des revendications 2 à 5, **caractérisé en ce que** la denture (5, 6) est autobloquante.

7. Dispositif selon l'une des revendications 2 à 6, **caractérisé en ce que** les flancs des dents de la denture (5, 6) sont rendus rugueux.

8. Dispositif selon l'une des revendications 1 à 7, **caractérisé en ce qu'**un capteur de température est disposé parallèlement à l'allure de la cartouche chauffante en hélice (1).

9. Dispositif selon l'une des revendications 1 à 8, **caractérisé en ce qu'**une languette de tôle élastique (8) ou un élément de ressort analogue est fixé à l'extrémité du tube partiel (3) qui est éloignée du point de séparation des tubes partiels (2, 3), languette ou élément auquel ou à laquelle est fixée l'une des extrémités de la cartouche chauffante en hélice (1).

10. Dispositif selon l'une des revendications 1 à 9, **caractérisé en ce que** l'extrémité de la cartouche chauffante en hélice (1) est fixée à l'extrémité du tube partiel (2) qui est éloignée du point de séparation des tubes partiels (2, 3), sachant que les branchements électriques (10) de la cartouche chauffante (1) partent de cette extrémité de la cartouche.
